(19) Europäisches Patentamt / European Patent Office / Office européen des brevets

(11) **EP 2 655 891 B1**

(12) **EUROPÄISCHE PATENTSCHRIFT**

(45) Veröffentlichungstag und Bekanntmachung des Hinweises auf die Patenterteilung:
**05.02.2020 Patentblatt 2020/06**

(21) Anmeldenummer: **11807889.8**

(22) Anmeldetag: **16.12.2011**

(51) Int Cl.:
**F04D 29/54** *(2006.01)* **F01D 25/30** *(2006.01)*
**F04D 29/66** *(2006.01)*

(86) Internationale Anmeldenummer:
**PCT/EP2011/073090**

(87) Internationale Veröffentlichungsnummer:
**WO 2012/084725 (28.06.2012 Gazette 2012/26)**

(54) **VENTILATORDIFFUSOR MIT KREISFÖRMIGEM EINLASS UND NICHT ROTATIONSSYMMETRISCHEM AUSLASS**

FAN DIFFUSER WITH CIRCULAR INLET AND NON ROTATION-SYMMETRIC OUTLET

DIFFUSEUR DE VENTILATEUR AVEC ENTRÉE CIRCULAIRE ET SORTIE SANS SYMÉTRIE DE RÉVOLUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2010 DE 202010016820 U**

(43) Veröffentlichungstag der Anmeldung:
**30.10.2013 Patentblatt 2013/44**

(73) Patentinhaber: **ebm-papst Mulfingen GmbH & Co. KG**
**74673 Mulfingen (DE)**

(72) Erfinder:
- **ENGERT, Markus**
  **97922 Lauda-Königshofen (DE)**
- **REICHERT, Erik**
  **97944 Boxberg (DE)**
- **HAAF, Oliver**
  **74635 Kupferzell (DE)**
- **PFAFF, Christian**
  **74653 Künzelsau (DE)**
- **SCHNEIDER, Marc**
  **74677 Dörzbach (DE)**
- **SCHÖNE, Jürgen**
  **97980 Bad Mergentheim (DE)**
- **BOHL, Katrin**
  **74653 Künzelsau (DE)**
- **BECK, Sven**
  **74238 Krautheim (DE)**
- **BEST, Dieter**
  **74653 Ingelfingen (DE)**
- **EHMANN, Tobias**
  **74626 Bretzfeld Unterheimbach (DE)**
- **FRANK, Alexander**
  **74629 Pfedelbach (DE)**
- **GRUBER, Erhard**
  **74589 Satteldorf (DE)**
- **MASCHKE, Matthias**
  **74635 Kupferzell (DE)**
- **SAUER, Thomas**
  **65510 Idstein (DE)**

(74) Vertreter: **Staeger & Sperling Partnerschaftsgesellschaft mbB**
**Sonnenstraße 19**
**80331 München (DE)**

(56) Entgegenhaltungen:
| | |
|---|---|
| EP-A1- 0 651 207 | WO-A1-2010/046668 |
| FR-A1- 2 816 361 | US-A- 2 144 035 |
| US-A- 2 376 642 | US-A- 2 668 523 |
| US-A- 2 750 865 | US-A- 5 342 173 |
| US-B1- 6 375 416 | |

**Beschreibung**

Die Erfindung betrifft eine Ventilatoranordnung nach Anspruch 1.

Das Prinzip eines Diffusors und auch dessen Anwendung in Nachschaltung zu einer Turbomaschine sind seit Jahrzehnten bekannt. Diffusoren werden technisch genutzt, um kinetische Energie in Druckenergie zu wandeln. Dazu muss die Strömung verzögert werden. Man erreicht dies in der Regel durch eine stetige oder unstetige Erweiterung des Strömungsquerschnitts, die geometrisch auf verschiedene Weisen realisiert werden kann. Im Ventilatorbau können Diffusoren eingesetzt werden, um Gasströmungen zu verlangsamen und den Gasdruck zu erhöhen. Dabei stellt ein Diffusor vom Prinzip her den Umkehrfall einer Düse dar, indem der Querschnitt der Austrittsöffnung - im Gegensatz zur Düse - größer als der Querschnitt der Eintrittsöffnung ist und sich der Querschnitt des Diffusorinnenraums ausgehend vom Querschnitt der Eintrittsöffnung bis zum Querschnitt der Austrittsöffnung hin vergrößert. Dies gilt für Gasströmungen mit Unterschallgeschwindigkeit.

Die Vorteilhaftigkeit des Einsatzes eines Diffusors in Nachschaltung zu einem Axial-, Diagonal- oder Radialventilator beruht darauf, dass in der Regel bei allen Ventilator-Bauformen die Verluste, welche durch Dissipation des austretenden Volumenstroms auftreten, im Vergleich zu anderen Verlustquellen dominant sind. Ein Teil der Strömungsenergie des austretenden Strahls lässt sich durch den Diffusor in statischen Druck rückwandeln, wobei die Erhöhung des statischen Druckes eine Wirkungsgradsteigerung bewirkt. Außerdem kann die Drehzahl, bezogen auf die gleiche Luftleistung reduziert werden, was eine Reduktion des Geräuschs bedeutet.

Ein Diffusor der eingangs genannten Art ist beispielsweise aus der EP 0 581 978 A1 bekannt. Diese Druckschrift betrifft einen mehrzonigen Diffusor für eine axial durchströmte Turbomaschine, in dem Knickwinkel des Diffusoreintritts - sowohl an einer Nabe, als auch an einem Zylinder der Turbomaschine - ausschließlich zwecks Vergleichmäßigung eines Totaldruckprofils über der Kanalhöhe am Austritt der letzten Schaufelreihe festgelegt sind. Dabei sind innerhalb einer Verzögerungszone des Diffusors Mittel zur Drallwegnahme der drallbehafteten Strömung in Form von Strömungsrippen vorgesehen und strömungsführende Leitringe unterteilen den Diffusor in mehrere Kanäle. Um bei vorgegebenem Diffusor-Flächenverhältnis, worunter das Verhältnis der Strömungsquerschnitte am Austritt zum Eintritt des Diffusors verstanden wird, und bei kleinstmöglichem Durchmesser der ersten Diffusionszone sowie bei physikalisch größtmöglichem Druckrückgewinn und drallfreier Abströmung die Gesamtlänge des Diffusors minimal zu halten, sind für den Diffusor spezielle unterschiedliche Ausbildungen der ersten und zweiten Diffusionszone vorgesehen, die allerdings einen fertigungstechnisch relativ hohen Aufwand erfordern.

Bei der als bevorzugt in der EP 0 581 978 A1 beschriebenen Ausführung befindet sich der bekannte Diffusor in einem Abgasgehäuse einer Gasturbine, das so konzipiert ist, dass es mit der Abgasströmung nicht in Kontakt kommt. Die eigentliche Strömungsführung wird vom Diffusor übernommen, der in seiner ersten Zone als Einsatzteil für das Abgasgehäuse ausgelegt ist. Hierzu sind eine äußere Begrenzungswand und eine innere Begrenzungswand des Diffusors über Strömungsrippen gehalten. Die äußere Begrenzungswand, die den Querschnitt des Diffusorinnenraums außenseitig begrenzt, bildet ein Außengehäuse des Diffusors, und die innere Begrenzungswand, die den Querschnitt des Diffusorinnenraums innenseitig begrenzt, bildet ein Innengehäuse. Der Diffusor kann so als bestehend aus einem den Strömungsraum außenseitig begrenzenden Außendiffusorteil und einem den Strömungsraum innenseitig begrenzenden Innendiffusorteil aufgefasst werden.

Weitere Konfigurationen, die der Erfindung nahe kommen, werden von den Druckschriften FR 2 816 361 A1, US 2 376 642 A und US 2 668 523 A offenbart.

Der Erfindung liegt die Aufgabe zu Grunde, eine Ventilatoranordnung bekannter Art derart zu gestalten, dass auf konstruktiv wenig aufwändige Weise Verbesserungen des Betriebsverhaltens eines Axial-, Diagonal- oder Radialventilators hinsichtlich Wirkungsgrad und Geräusch erzielt werden können.

Diese Aufgabe wird erfindungsgemäß durch die Merkmale des Anspruchs 1 gelöst. Dies beinhaltet unter anderem, dass der Querschnitt des Außendiffusorteils entlang der Hauptströmungsrichtung von einem kreisförmigen Querschnitt an der Eintrittsöffnung auf einen nicht kreisförmigen Querschnitt an der Austrittsöffnung übergeht. Darüber hinaus kann beim Diffusor, bei dem zusätzlich in bekannter Weise konzentrisch zu dem Außendiffusorteil ein Innendiffusorteil angeordnet ist, das ein Gehäuse aufweist, das als Innengehäuse den Diffusorinnenraum innenseitig begrenzt, das Innendiffusorteil derart ausgeführt sein, dass es in mindestens einem zur Hauptströmungsrichtung senkrechten Schnitt einen nicht kreisförmigen Querschnitt um die Drehachse des Lüfters aufweist.

Auf diese Weise wird also ein Außendiffusorteil für einen Ventilator axialer, radialer oder diagonaler Bauart vorgesehen, das weitestgehend entlang der Hauptströmungsrichtung von einem kreisförmigen auf einen nicht kreisförmigen Querschnitt übergeht. Darüber hinaus ist auch ein Innendiffusorteil im Diffusor vorgesehen, das in mindestens einem Schnitt einen nicht kreisförmigen Querschnitt um die Drehachse des Lüfters aufweisen kann. Bei dem nicht kreisförmigen Querschnitt kann es sich dabei insbesondere um einen solchen handeln, der in der Grundgestalt polygonal, insbesondere quadratisch, ist.

Wie bekannte, hinter einen Ventilator geschaltete Diffusoren bewirkt der Diffusor einer erfindungsgemäßen Ventilatoranordnung eine Druckrückwandlung von dynamischem Druck in statischen Druck. Dabei wird die Geschwindigkeit des Fluids verringert und vergleichmäßigt. Während ein bekannter, zur Rotationsachse des Ventilators vollständig rotationssymmetrisch gestalteter Diffusor die Geschwindigkeit hauptsächlich in axialer Richtung - also die Axialkomponente des Geschwindigkeitsvektors - in statischen Druck wandelt und bei vorausgesetzter Drallkonstanz die Umfangskomponente der Geschwindigkeit nur in dem Maß reduziert, wie der Durchmesser zunimmt, wandelt der Diffusor einer erfindungsgemäßen Ventilatoranordnung zusätzlich einen Teil der Umfangsgeschwindigkeit des Gases in statischen Druck, da die nicht rotationssymmetrische Geometrie eine Bewegung in Umfangsrichtung hemmt. Dadurch erhöht sich vorteilhafterweise der Diffusorwirkungsgrad.

Der Diffusor der erfindungsgemäßen Ventilatoranordnung, welcher durch die Ausführung seines Außendiffusorteils und/oder Innendiffusorteils einen nicht vollständig rotationssymmetrischen Strömungsquerschnitt aufweist, bietet zudem noch einen weiteren Vorteil. Der maximale Bauraum, der für einen Diffusor zur Verfügung steht, ist in Endgeräten normalerweise quaderförmig und durch das Produkt einer maximalen Breite, einer maximalen Höhe und einer maximalen Länge bestimmt. Unter diesen Bedingungen lässt sich durch die beispielsweise bei einem polygonalen, insbesondere quadratischen, Querschnitt vorhandenen Ecken bei einem Diffusor entsprechend der Erfindung im Vergleich mit einem vollständig rotationssymmetrischen Diffusor eine größere Fläche normal zur Rotationsachse des Ventilators ausnutzen und somit eine höhere Rückwandlung der Axialgeschwindigkeit ermöglichen. Auch dadurch erhöht sich der Diffusorwirkungsgrad.

Auch hat bei einem Diffusor der erfindungsgemäßen Ventilatoranordnung, ohne dass die definierten Bauraumgrenzen überschritten werden, der Querschnitt der Austrittsöffnung aufgrund der möglichen Ausnutzung der Ecken einen größeren äquivalenten Radius als der eines vollständig rotationssymmetrischen Diffusors, und kann so eine erhöhte Druckrückwandlung aus der Umfangsgeschwindigkeit erzielen. Dabei ist unter einem äquivalenten Radius der Radius eines Kreises zu verstehen, der den gleichen Flächeninhalt wie die nicht kreisförmige Diffusorfläche besitzt. Den zweifachen äquivalenten Radius bezeichnet man auch als hydraulischen Durchmesser.

Die erfindungsgemäße Ventilatoranordnung weist mit Vorteil einen, insbesondere mittels eines elektrischen Außenläufer-Motors betriebenen, Axial-, Radial- oder Diagonalventilator auf, ohne dass dabei ein Nachleitrad vorgesehen werden muss.

Der Gesamtaufbau einer erfindungsgemäßen Ventilatoranordnung mit Ventilator und Diffusor wird zweiteilig ausgeführt.

Unter zweiteiligem Aufbau wird verstanden, dass der erfindungsgemäße Diffusor als ein von den feststehenden Bauteilen des Ventilators getrenntes - also als ein separates - Bauteil ausgeführt ist, wobei er aber über Befestigungsmittel, wie Schrauben, Nieten, Klammern, etc., oder durch reib-, form- und/oder materialschlüssige Verbindungen, wie durch einen Bajonettverschluss, durch eine Clipsverbindung, durch Schweißen etc., an den feststehenden Teilen des Ventilators, insbesondere am Wandring oder an einem Schutzgitter, befestigbar bzw. befestigt ist. Dabei ist es mit Vorteil auch möglich, den Diffusor einer erfindungsgemäßen Ventilatoranordnung so auszuführen, dass er eine Eignung für eine nachträgliche Montage an einen bereits eingebauten Ventilator besitzt.

Des Weiteren wird bei einem derartigen zweiteiligen Aufbau einer Anordnung auch der Diffusor selbst mehrteilig aufgebaut, worunter zu verstehen ist, dass er aus mehreren einzelnen Diffusorteilen besteht, welche über Befestigungsmittel oder Verbindungen, wie vorstehend genannt, miteinander verbindbar bzw. verbunden sind. Die solchermaßen am Einsatzort montierbaren Diffusorteile können dabei in logistisch vorteilhafter Weise derart ausgeführt werden, dass sie z. B. stapelbar sind und sich das Transportvolumen verringert. Dadurch ist es möglich, die Diffusorgeometrie, insbesondere die Diffusorlänge durch Weglassen oder Austausch einzelner Diffusorteile nach Bedarf zu verändern.

Weitere vorteilhafte Ausführungen der Erfindung sind in den Unteransprüchen und der nachfolgenden Beschreibung enthalten. Anhand mehrerer in den beiliegenden Zeichnungsfiguren dargestellter Ausführungsbeispiele wird die Erfindung näher erläutert. Es zeigen:

| | |
|---|---|
| Fig. 1 | im Längsschnitt eine Prinzipdarstellung einer aus einem Ventilator und einem Diffusor bestehenden Ventilatoranordnung. |
| Fig. 2 | eine perspektivische Ansicht auf eine Gasaustrittseite einer bevorzugten Ausführung eines Diffusors einer erfindungsgemäßen Ventilatoranordnung |
| Fig. 3 | eine perspektivische Ansicht auf eine Gaseintrittseite der in Fig. 2 dargestellten bevorzugten Ausführung eines Diffusors, |
| Fig. 4 | eine erfindungsgemäße Ventilatoranordnung in einer perspektivischen Schnittansicht, |
| Fig. 5 | eine perspektivische Ansicht ähnlich wie in Fig. 2, |
| Fig. 6 | eine perspektivische Ansicht ähnlich wie in Fig. 3, |
| Fig. 7 | eine grafische Darstellung einer bevorzugten Abhängigkeit eines Verhältnisses der Querschnittsfläche des Diffusors auf der Gasaustrittsseite zur Querschnittsfläche des Diffusors auf der Gaseintrittsseite von einem Verhältnis der Länge des Diffusors zu einem Außendurchmesser der Eintrittsöffnung des Diffusors, |

| | |
|---|---|
| Fig. 8 | eine grafische Darstellung einer bevorzugten Abhängigkeit eines Verhältnisses des hydraulischen Durchmessers zur Länge des Diffusors von einem Verhältnis der Länge des Diffusors zu einem Außendurchmesser der Eintrittsöffnung des Diffusors, |
| Fig. 9 | eine perspektivische Ansicht auf eine bevorzugte Ausführung eines Außen- oder Innendiffusorteils einer erfindungsgemäßen Ventilatoranordnung, |
| Fig. 10a/Fig. 10b und Fig. 11a / 11b | jeweils einen axialen und einen radialen Halbschnitt zweier bevorzugter Ausführungen eines Außendiffusorteils einer erfindungsgemäßen Ventilatoranordnung, |
| Fig. 12a / Fig. 12b bis Fig. 15a / 15b | jeweils einen axialen und einen radialen Halbschnitt von vier bevorzugten Ausführungen eines Innendiffusorteils einer erfindungsgemäßen Ventilatoranordnung, |
| Fig. 16a / Fig. 16b und Fig. 17a / 17b | jeweils einen axialen und einen radialen Halbschnitt zweier bevorzugter Ausführungen von Kombinationen von Außen- und Innendiffusorteilen einer erfindungsgemäßen Ventilatoranordnung, wobei das Außendiffusorteil jeweils verkürzt ist, |
| Fig. 18a / Fig. 18b und Fig. 19a / 19b | jeweils einen axialen und einen radialen Halbschnitt zweier bevorzugter Ausführungen von Kombinationen von Außen- und Innendiffusorteilen einer erfindungsgemäßen Ventilatoranordnung, |
| Fig. 20a / Fig. 20b und Fig. 21a / 21b | jeweils einen axialen und einen radialen Halbschnitt zweier bevorzugter Ausführungen von Kombinationen von Außen- und Innendiffusorteilen einer erfindungsgemäßen Ventilatoranordnung, wobei die Innendiffusorteile verkürzt sind, |
| Fig. 22a | einen axialen Halbschnitt einer erfindungsgemäßen Ventilatoranordnung mit einem Zentrifugalventilator, |
| Fig. 22b | einen axialen Halbschnitt einer erfindungsgemäßen Ventilatoranordnung mit einem Diagonalventilator, |
| Fig. 23a / Fig. 23b | jeweils einen axialen und einen radialen Halbschnitt einer erfindungsgemäßen Ventilatoranordnung wie in Fig. 12a / 12b, mit einem Innendiffusorteil, wobei die Austrittsfläche besonders markiert ist. |

In den Figuren der Zeichnung sind dieselben Teile auch stets mit denselben Bezugszeichen versehen, so dass sie in der Regel auch jeweils nur einmal beschrieben werden.

Wie zunächst aus der Darstellung in Fig. 1 hervorgeht, umfasst eine erfindungsgemäße Ventilatoranordnung 1 einen Ventilator 2, z. B. wie dargestellt in axialer Bauart, und einen Diffusor 3, der - was aus der schematisierten Darstellung nicht eindeutig hervorgeht - erfindungsgemäß ausgebildet ist bzw. zumindest sein kann, so wie dies für einen Diffusor 3 einer erfindungsgemäßen Ventilatoranordnung exemplarisch in Fig. 2 und 3 und für die erfindungsgemäße Anordnung 1 detaillierter in Fig. 4 gezeigt ist. Der Ventilator 2, bei dem es sich alternativ auch um einen solchen in radialer oder diagonaler Bauart handeln könnte, ist durch einen Motor 4 betrieben und über einen Wandring 5 an einem Untergrund 6, wie einer Wand, befestigt.

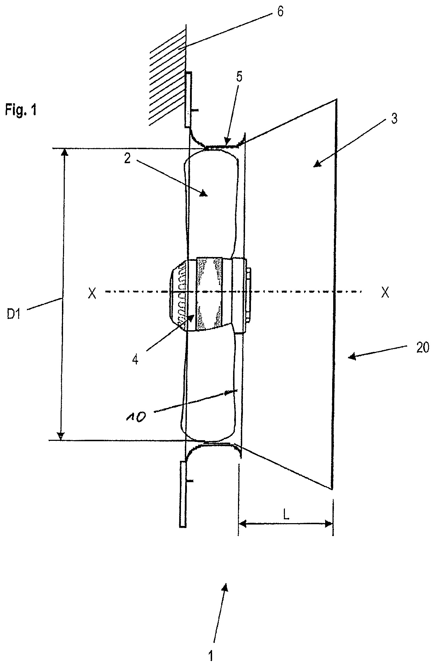

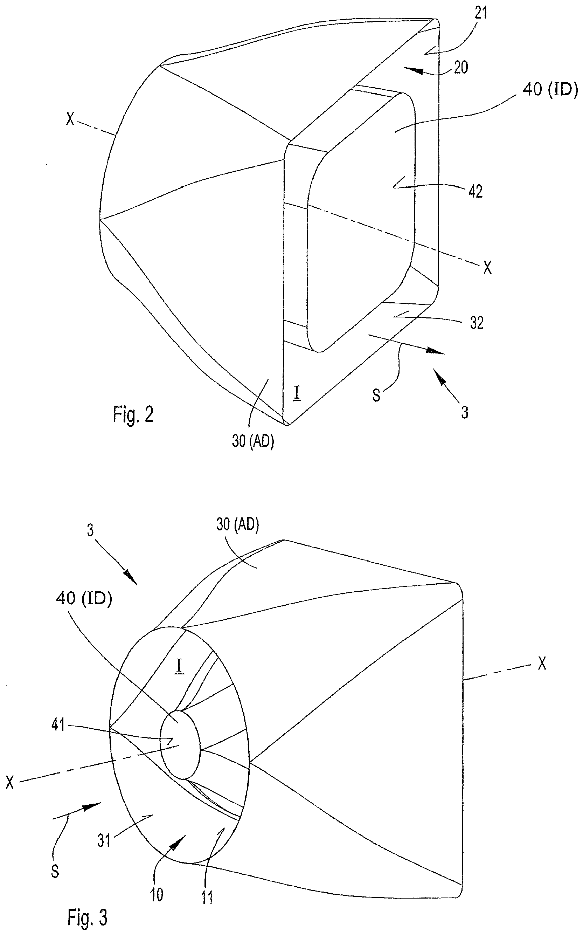

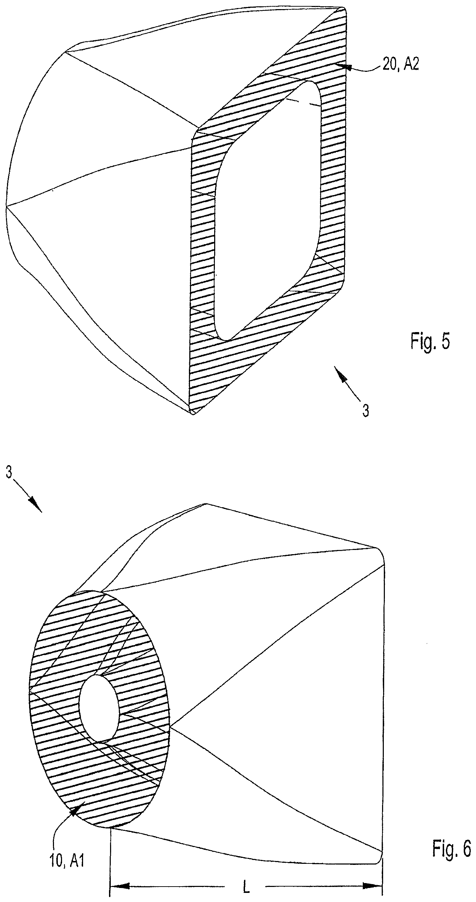

Fig. 2 und 3 sowie auch Fig. 5 und 6 veranschaulichen, dass ein Diffusor 3 einer erfindungsgemäßen Ventilatoranordnung eine Eintrittsöffnung 10 und eine Austrittsöffnung 20 für ein gasförmiges Medium aufweist, das von der Eintrittsöffnung 10 in einer axial gerichteten - also im Wesentlichen parallel zur Längsachse X-X des Diffusors 3 verlaufenden - Hauptströmungsrichtung S einen von einem Außengehäuse 30 umschlossenen Diffusorinnenraum I bis zur Austrittsöffnung 20 durchströmt. Die in Fig. 1 dargestellte Eintrittsöffnung 10 besitzt eine kreisförmige Außenkontur, wobei das Bezugszeichen D1 den Durchmesser des Ventilators 2 bezeichnet. Der Diffusor 3 weist eine Länge L auf.

Der Querschnitt 21 (schraffierte Querschnittsfläche A2 in Fig. 5) der Austrittsöffnung 20 ist größer als der Querschnitt 11 (schraffierte Querschnittsfläche A1 in Fig. 6) der Eintrittsöffnung 10, und der Querschnitt des Diffusorinnenraums I vergrößert sich ausgehend vom Querschnitt 11 der Eintrittsöffnung 10 bis hin zum Querschnitt 21 der Austrittsöffnung 20 insbesondere stetig. Das Außengehäuse 30 bildet ein den Diffusorinnenraum I außenseitig begrenzendes Außendiffusorteil AD.

Es ist vorgesehen, dass der Querschnitt des Außendiffusorteils AD entlang der Hauptströmungsrichtung S von einem kreisförmigen Querschnitt 31 an der Eintrittsöffnung 10 auf einen nicht kreisförmigen Querschnitt 32 an der Austrittsöffnung 20 übergeht. Letzterer ist im Wesentlichen - wie in Fig. 2 dargestellt - bevorzugt quadratisch.

Konzentrisch zu dem Außendiffusorteil AD ist ein Innendiffusorteil ID angeordnet, das durch das ihn bildende Innengehäuse 40 den Diffusorinnenraum I innenseitig begrenzt. Es ist dabei vorgesehen, dass das Innendiffusorteil ID in mindestens einem zur Hauptströmungsrichtung S senkrechten Schnitt einen nicht kreisförmigen Querschnitt 42 um die gemeinsame Längsachse X-X von Innendiffusorteil ID und Außendiffusorteil AD aufweist. Ein solcher - abgesehen von Verrundungen in den Ecken zur Vermeidung von Strömungsabrissen - nicht kreisförmiger, im Wesentlichen, d. h. in der Grundgestalt, quadratischer, Querschnitt 42 liegt dabei z. B. an der Austrittsöffnung 20 vor. Der Querschnitt 41 des Innendiffusorteils ID an der Eintrittsöffnung 10 ist stattdessen kreisförmig ausgebildet.

Als eine besonders vorteilhafte Ausführung bei einem Diffusor 3 mit einem konzentrisch zum Außendiffusorteil AD angeordneten Innendiffusorteil ID, die etwa die gleiche Länge L (weniger als 10 Prozent Differenz bezogen auf die Länge des größeren Teils) aufweisen, ist eine Gestaltung des Flächenverlaufs nach der Formel (1)

$$A2/A1 = - 0,45 * (L/D1)^2 + L/D1 + 1 \qquad (1)$$

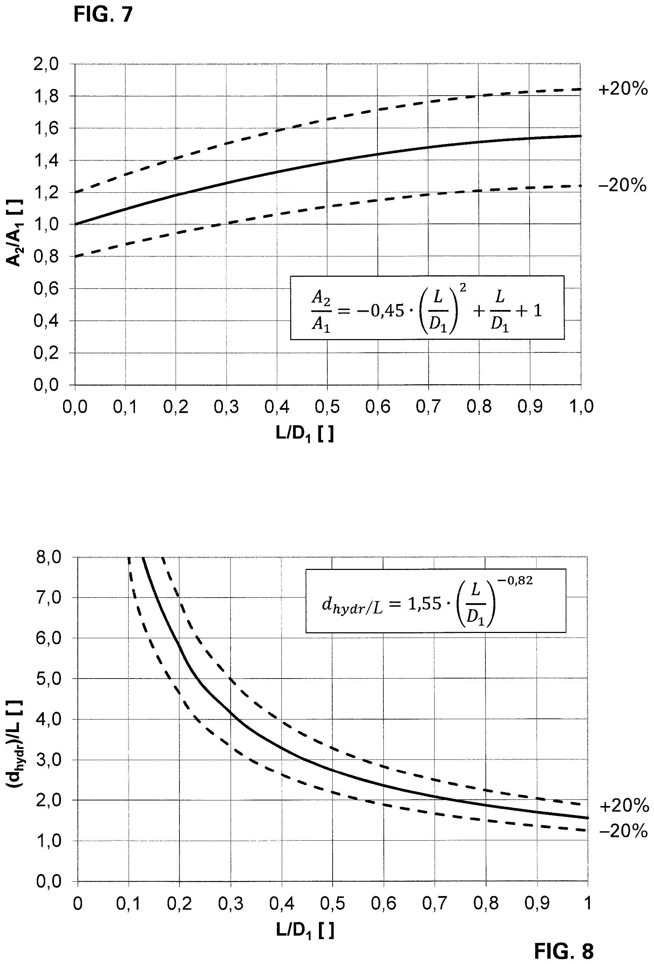

anzusehen, wobei der Wert A2/A1 um $\pm$ 20 Prozent streuen kann. Die Formel (1) wird durch Fig. 7 veranschaulicht, wobei - wie auch vorstehend bereits ausgeführt - A1 die durchströmte Fläche am Diffusoreintritt 10, A2, die durchströmte Fläche am Diffusoraustritt 20, L die Diffusorlänge und D1 der Ventilatordurchmesser sind.

Es wurde gefunden, dass ein längenbezogener hydraulischer Durchmesser $d_{hydr}$ (doppelter Wert des äquivalenten Radius) - insbesondere unabhängig von einem Innendiffusorteil ID - dann als optimal anzusehen ist, wenn er nach Formel (2) dimensioniert ist:

$$d_{hydr}/L = 1,55 * (L/D1)^{-0,82} \qquad (2),$$

wie dies durch Fig. 8 veranschaulicht ist. Auch hier beträgt die zulässige Schwankungsbreite $\pm$ 20 Prozent des berechneten Wertes $d_{hydr}/L$.

Diffusorwände, die das Innengehäuse 40, das Außengehäuse 30 und/oder - bei einem mehrteiligen Aufbau - Teile derselben bilden, können aus Kunststoff bestehen und vorzugsweise durch Ur- oder Umformverfahren, wie Spritzgießen, Extrudieren, Rotationsformen, Schäumen, Vakuumtiefziehen, Blasformen, o. ä., hergestellt sein.

In Hybridbauweise können dabei mechanisch hoch belastete Bereiche des Diffusors 3 durch mindestens ein bei einem Urformprozess eingelegtes oder später angebrachtes Metallteil verstärkt sein.

Auch kann in Spantenbauweise eine tragende Struktur des Diffusors 3 ein Gestell sein, das von einem dünnen Material, insbesondere aus Kunststoff oder aus Blech, überspannt ist.

Erfindungsgemäß ist der Diffusor 3 mehrteilig hergestellt und können hierfür dünne (Dicke kleiner 1 mm, vorzugsweise kleiner 0,5 mm), ursprünglich ebene Platten, insbesondere gestanzte Bleche, bei der Montage gebogen und miteinander verbunden werden. Zur Versteifung dieser Konstruktion werden zusätzliche Anbauteile verwendet.

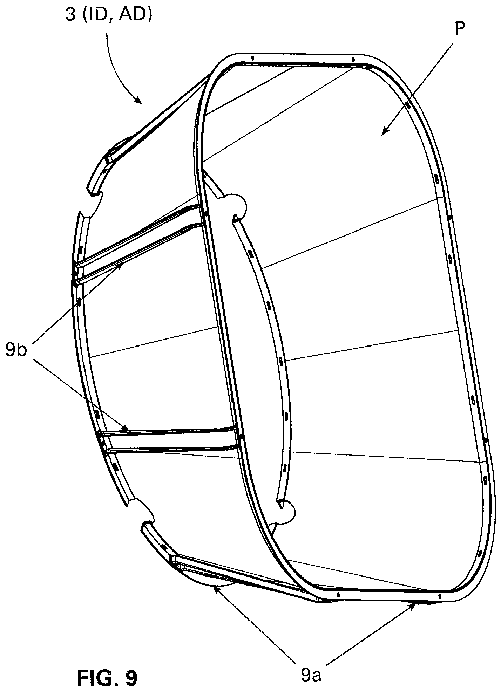

Fig. 9 zeigt eine Ausführung eines Diffusorteils 3 einer erfindungsgemäßen Ventilatoranordnung, der auch als Außendiffusorteil AD oder als Innendiffusorteil ID bzw. als Außengehäuse 30 oder als Innengehäuse 40 eingesetzt werden kann. Diese Ausführung ist insbesondere als Aufbaulösung für Wandringe 5 mit einem Durchmesser D1 von mehr als 500 mm geeignet. Die Wandung dieser Ausführung ist aus einer vorzugsweise aus Kunststoff bestehenden Folie bzw. Plane P gefertigt, die vorteilhafterweise zum Transport gefaltet werden kann. Der logistische Aufwand kann somit gesenkt werden. Zur Herstellung des Diffusors 3 bzw. Diffusorteils AD, ID kann z. B. ein Planenzuschnitt zusammengeschweißt und mit Trag- und Formringen 9a verbunden werden, welche die Eintrittsöffnung 10 und die Austrittsöffnung 20 umfassen. Die Trag- und Formringe 9a können dabei miteinander über Stützstreben 9b verbunden sein, wobei sie mit diesen insbesondere - wie vorstehend ausgeführt - in Spantenbauweise ein Gestell bilden. Der Trag- und Formring 9a an der Eintrittsöffnung 10 ist im dargestellten Fall kreisförmig, der Trag- und Formring 9a an der Austrittsöffnung 20 etwa quadratisch, jedoch mit verrundeten Ecken ausgeführt. Durch die Trag- und Formringe 9a kann dabei nicht nur die Plane P gestützt werden, sondern die Ringe 9a können vorteilhafterweise auch dazu dienen, um ein Schutzgitter, insbesondere an der Austrittsöffnung 20, aufzunehmen um einen Wandring 5 an der Eingangsöffnung 10 anzuschrauben. Durch die Stützstreben 9b, die - wie die Trag- und Formringe 9a - je nach erforderlicher Festigkeit aus Stahl oder Kunststoff hergestellt werden können, kann, ggf. unter Einsatz einer zusätzlichen Spannvorrichtung, die Plane P gespannt werden. Da es sich bei der Plane P um ein flexibles Bauteil handelt, kann durch einen veränderten Zuschnitt der Plane P (und eine Anpassung der Stützstreben 9b) die Länge L des Diffusors 3 mit geringem Aufwand verändert werden. Auch ist es in einfacher Weise möglich, die Plane P mit einer Oberflächengeometrie (sogenannten Riblets) auszustatten, die auf turbulent überströmten Oberflächen eine Verminderung des Reibungswiderstands bewirkt. Hierzu können in die Plane mikroskopisch kleine Rillen mit einem gegenseitigen Abstand von weniger als 100 $\mu$m eingebracht werden, welche Querbewegungen der Strömung behindern und auf diese Weise die Wandreibung um bis zu etwa 8 Prozent vermindern.

Der Diffusor 3 einer erfindungsgemäßen Ventilatoranordnung kann auch mit einem Berührschutz ausgeführt werden, der als separates Bauteil ausgeführt ist. Ist der Diffusor 3 mit Berührschutz ausgeführt, kann ein bei Ventilatoren üblicherweise verwendetes Ventilator-Berührschutzgitter weggelassen oder konstruktiv wesentlich vereinfacht werden.

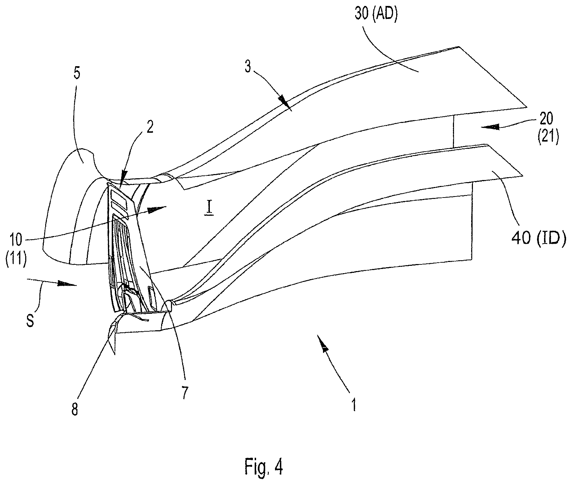

Da der Berührschutz zum Laufrad - dargestellt ist in Fig. 4 eine Ventilatorschaufel 7 (mit Nabe 8) - erfindungsgemäß in der Regel einen größeren Abstand hat als ein herkömmlich verwendetes Berührschutzgitter, darf der Strebenabstand größer ausgeführt werden, was strömungstechnisch und akustisch von Vorteil sein kann. Der Berührschutz kann dabei konstruktiv sehr einfach, z.B. in Form rechteckiger Streben, konzipiert werden.

Wenngleich eine bevorzugte erfindungsgemäße Verwendung darin besteht, eine erfindungsgemäße Ventilatoranordnung mit einem, insbesondere mit einem elektrischen Außenläufer-Motor betriebenen, Niederdruck-Axial- oder Niederdruck-Diagonalventilator ohne Nachleitrad auszustatten, so kann die erfindungsgemäße Ventilatoranordnung doch mit einem Nachleitrad ausgeführt werden. Ein solches Nachleitrad besteht aus feststehenden Leitelementen und lenkt Umfangs- und/oder Radialkomponenten der Strömungsgeschwindigkeit im Diffusor 3 in Axialrichtung X-X um. Dadurch erhöht das Nachleitrad die statische Druckrückwandlung des Diffusors 3. Ähnlich, wie für einen Berührschutz beschrieben, wird das Nachleitrad als separates Bauteil ausgeführt.

Der Diffusor 3 kann auch derart ausgeführt werden, dass er zusätzlich zu seiner Eigenfunktion gleichzeitig sowohl die Nachleitrad-, als auch die Berührschutzfunktion realisiert. Auch hier ist eine Ausführung als separates, an den Diffusor 3 montierbares Teil möglich.

Der Diffusor 3 kann mit einer Schalldämmung, insbesondere durch schalldämmende Materialien, ausgerüstet sein. Dazu kann beispielsweise ein Dämmstoff auf der der Hauptströmung S zugewandten Innenseite des Diffusors 3 im Diffusorinnenraum I in einer solchen Form angebracht sein, dass die freie Oberfläche des Dämmstoffes die strömungstechnisch wirksame Diffusorwand des Innengehäuses 40 und/oder des Außengehäuses 30 bildet. Zusätzlich oder ausschließlich kann das schalldämmende Material aber auch auf der - der Hauptströmung S abgewandten - Diffusoraußenfläche - also außenseitig auf dem Außendiffusorteil 30 - aufgebracht sein. Um mittel- bis tieffrequente Schallabstrahlung zu reduzieren, kann der Diffusor mit einem System zur aktiven Geräuschreduzierung - "Active Noise Control" - ausgeführt sein.

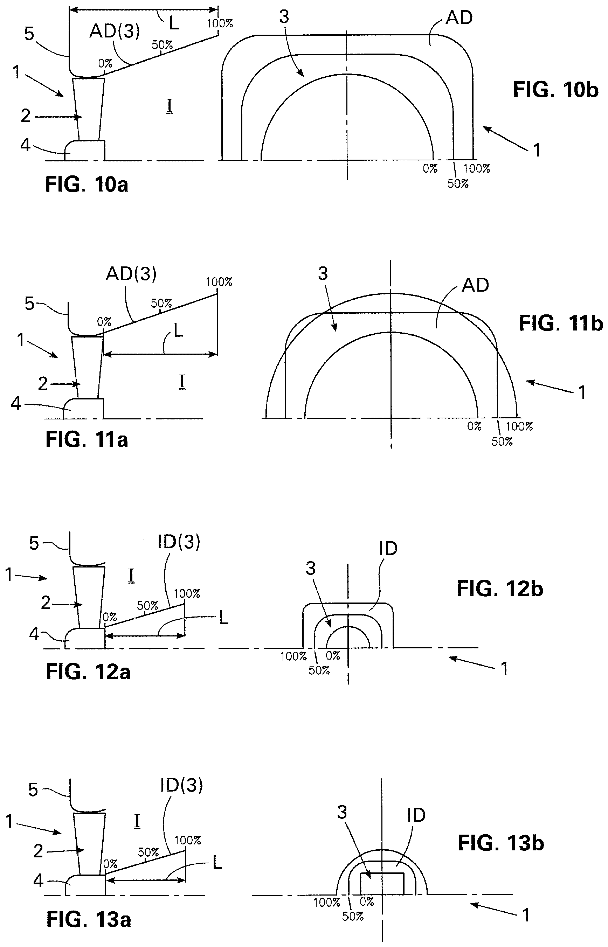

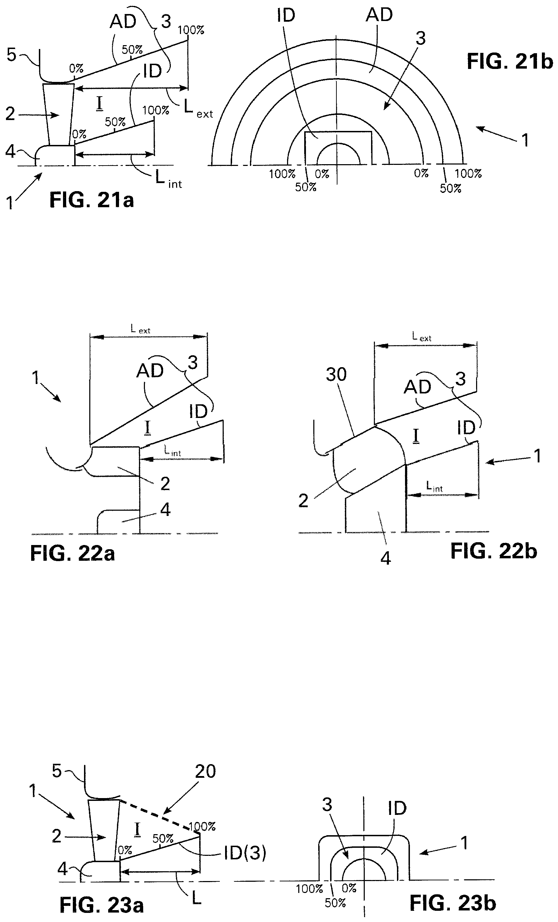

Fig. 10a / Fig. 10b bis Fig. 23a / 23b stellen jeweils in axialen und radialen Halbschnitten bevorzugte Ausführungen von Außendiffusorteilen AD und/oder Innendiffusorteilen ID und deren Kombinationen in erfindungsgemäßen Ventilatoranordnungen 1 dar. Außer in Fig. 22a und 22b sind dabei jeweils für drei ausgezeichnete Stellen (0 Prozent der Länge L, 50 Prozent der Länge L und 100 Prozent der Länge L) die Konturen der Diffusorteile AD, ID im radialen Halbschnitt dargestellt.

Wie die verschiedenen Ausführungen zeigen, können hinsichtlich der Längen der Diffusorteile AD, ID drei unterschiedliche Varianten unterschieden werden:

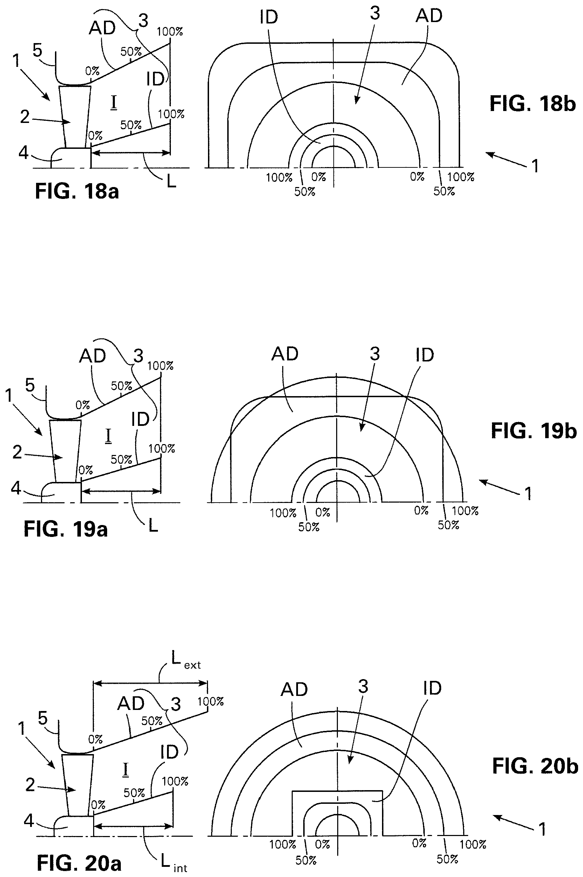

A) beide Teile AD, ID weisen die gleiche Länge L auf (Fig. 18a, Fig. 19a, Fig. 22b), oder es gibt nur ein Teil AD, ID mit einer bestimmten Länge L (Fig. 10a bis Fig. 15a, Fig. 23a);

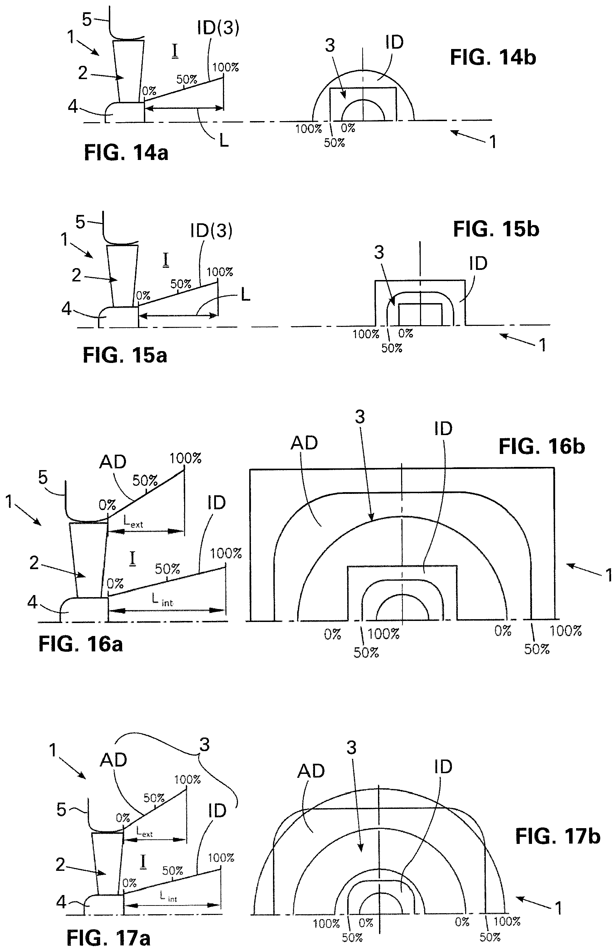

B) die Länge (in diesem Fall mit dem Bezugszeichen $L_{ext}$ bezeichnet) des Außendiffusorteils AD ist kleiner als die Länge (in diesem Fall mit dem Bezugszeichen $L_{int}$ bezeichnet) des Innendiffusorteils ID (Fig. 16a, Fig. 17a);

C) die Länge (in diesem Fall ebenfalls mit dem Bezugszeichen $L_{ext}$ bezeichnet) des Außendiffusorteils AD ist größer als die Länge (in diesem Fall ebenfalls mit dem Bezugszeichen $L_{int}$ bezeichnet) des Innendiffusorteils ID (Fig. 20a, Fig. 21a, Fig. 22a).

Wie Fig. 22a zeigt, kann die Variante B) bevorzugt in einem Zentrifugalventilator, und, wie Fig. 22b zeigt, die Variante A) bevorzugt in einem Diagonalventilator eingesetzt werden.

In Fig. 10a / Fig. 10b ist ein Außendiffusorteil AD mit folgender Gestaltung seiner Kontur dargestellt: bei 0 Prozent der Länge L - kreisrund (rotationssymmetrisch), bei 50 Prozent der Länge L - im Wesentlichen quadratisch (d. h. mit abgerundeten Ecken, nicht rotationssymmetrisch), bei 100 Prozent ebenfalls im Wesentlichen quadratisch (d. h. mit abgerundeten, jedoch stärker als bei 50 Prozent ausgebildeten Ecken, nicht rotationssymmetrisch). Fig. 12a / Fig. 12b stellen ein gleichermaßen ausgebildetes Innendiffusorteil ID dar.

In Fig. 11a / Fig. 11b ist ein Außendiffusorteil AD mit folgender Gestaltung seiner Kontur dargestellt: bei 0 Prozent der Länge L - kreisrund (rotationssymmetrisch), bei 50 Prozent der Länge L - im Wesentlichen quadratisch (d. h. mit abgerundeten Ecken, nicht rotationssymmetrisch), bei 100 Prozent kreisrund (rotationssymmetrisch), Fig. 14a / Fig. 14b stellen ein gleichermaßen ausgebildetes Innendiffusorteil ID dar.

In Fig. 13a / Fig. 13b ist ein Innendiffusorteil ID mit folgender Gestaltung seiner Kontur dargestellt: bei 0 Prozent der Länge L - quadratisch (nicht rotationssymmetrisch), bei 50 Prozent der Länge L - im Wesentlichen quadratisch (d. h. mit abgerundeten Ecken, nicht rotationssymmetrisch), bei 100 Prozent kreisrund (rotationssymmetrisch).

In Fig. 15a / Fig. 15b ist ein Innendiffusorteil ID mit folgender Gestaltung seiner Kontur dargestellt: bei 0 Prozent der Länge L - quadratisch (nicht rotationssymmetrisch), bei 50 Prozent der Länge L - im Wesentlichen quadratisch (d. h. mit abgerundeten Ecken, nicht rotationssymmetrisch), bei 100 Prozent quadratisch (nicht rotationssymmetrisch).

In Fig. 16a / 16b ist eine erfindungsgemäße Ventilatoranordnung 1 dargestellt, bei der ein Außendiffusorteil AD mit einer Ausbildung nach Fig. 10a / Fig. 10b-allerdings ohne abgerundete Ecken bei 100 Prozent der Länge $L_{ext}$ - vorhanden ist, welches mit einem Innendiffusorteil ID mit einer Ausbildung nach Fig. 15a / Fig. 15b kombiniert ist. Die Länge $L_{ext}$ des Außendiffusorteils AD ist kleiner als die Länge $L_{int}$ des Innendiffusorteils ID.

In Fig. 17a / 17b ist eine erfindungsgemäße Ventilatoranordnung 1 dargestellt, bei der ein Außendiffusorteil AD mit einer Ausbildung nach Fig. 11a / Fig. 11b vorhanden ist, welches mit einem Innendiffusorteil ID mit einer Ausbildung nach Fig. 14a / Fig. 14b - allerdings mit abgerundeten Ecken bei 50 Prozent der Länge $L_{int}$ - kombiniert ist. Die Länge $L_{ext}$ des Außendiffusorteils AD ist auch hier kleiner als die Länge $L_{int}$ des Innendiffusorteils ID.

In Fig. 18a / 18b ist eine erfindungsgemäße Ventilatoranordnung 1 dargestellt, bei der ein Außendiffusorteil AD mit einer Ausbildung nach Fig. 10a / Fig. 10b vorhanden ist, welches mit einem Innendiffusorteil ID kombiniert ist, bei dem über die gesamte Länge L ein kreisförmiger Querschnitt vorliegt. Die Länge L des Außendiffusorteils AD ist genauso groß wie die Länge L des Innendiffusorteils ID.

Fig. 19a / 19b zeigen eine erfindungsgemäße Ventilatoranordnung 1 wie in Fig. 18a / Fig. 18b, mit dem Unterschied, dass das Außendiffusorteil AD eine Ausbildung nach Fig. 11a / Fig. 11b aufweist.

In Fig. 20a / 20b ist eine erfindungsgemäße Ventilatoranordnung 1 dargestellt, bei der ein Innendiffusorteil ID mit einer Ausbildung nach Fig. 12a / Fig. 12b - allerdings ohne abgerundete Ecken bei 100 Prozent der Länge $L_{int}$ - vorhanden ist, welches mit einem Außendiffusorteil AD kombiniert ist, bei dem über die gesamte Länge L ein kreisförmiger Querschnitt vorliegt. Die Länge $L_{ext}$ des Außendiffusorteils AD ist größer als die Länge $L_{int}$ des Innendiffusorteils ID.

Fig. 21a / 21b zeigen eine erfindungsgemäße Ventilatoranordnung 1 wie in Fig. 10a / Fig. 10b, mit dem Unterschied, dass das Innendiffusorteil ID eine Ausbildung nach Fig. 14a / Fig. 14b aufweist.

Die verschiedenen, vorstehend dargestellten Ausführungsformen der Erfindung besitzen je spezifische Vorteile, die von der Bauart des jeweiligen Ventilators 2, insbesondere vom Abströmfeld des Ventilators 2 und/oder vom zur Verfügung stehenden Bauraum sowie von weiteren Randbedingungen, bestimmt werden. Dies wird exemplarisch durch die bereits oben erwähnten Fig. 22a und Fig. 22b veranschaulicht.

An der in Fig. 23a / Fig. 23b gezeigten Darstellung der Ausführung gemäß Fig. 12a / Fig. 12b wird deutlich, dass nicht nur ein Außendiffusorteil AD allein (ohne Innendiffusorteil ID), sondern auch ein Innendiffusorteil ID allein (ohne Außendiffusorteil AD), die Funktion eines vollständigen Diffusors 3 übernehmen kann, was in der Zeichnung durch das jeweils in Klammern gesetzte Bezugszeichen 3 angedeutet wird. Ein Raum des Diffusors 3, der bei den letztgenannten Ausführungen dem Innenraum I der anderen Ausführungen entspricht, wird in diesen Ausführungen daher ebenfalls mit dem Bezugszeichen I bezeichnet. Dieser Raum wird, wie insbesondere Fig. 23a zeigt, einerseits durch den Wandring 5 und andererseits durch das Innendiffusorteil ID begrenzt, wobei sich zwischen diesen beiden Teilen 5, ID die Austrittsöffnung 20 erstreckt, bzw. die Abström-Querschnittsfläche A2 des Diffusors 3 aufgespannt wird. Es muss also kein Außengehäuse 30 vorhanden sein.

Wie bereits aus den vorstehenden Ausführungen hervorgeht, ist die vorliegende Erfindung nicht auf die dargestellten Ausführungsbeispiele beschränkt, sondern umfasst alle Varianten, die unter den Wortlaut von Anspruch 1 fallen. So fällt es auch in den Rahmen der Erfindung, wenn die Eintrittsöffnung 10 aufgrund einer entsprechenden Ausbildung des Innendiffusorteils ID keinen kreisringförmigen Querschnitt 11 und/oder die Austrittsöffung 20 aufgrund einer entsprechenden Ausbildung des Außendiffusorteils AD und/oder des Innendiffusorteils ID keinen ringförmigen Querschnitt 21 mit quadratischer Außen- und Innenkontur der jedoch in jedem Fall von der Grundgestalt her ringförmigen Öffnung 20 hat.

Neben den in den Zeichnungen dargestellten Ausführungsformen sind dabei als weitere, nicht dargestellte Ausführungsformen, z. B. die beiden folgenden bevorzugt möglich: Ein Außendiffusorteil AD mit folgender Gestaltung: bei 0 Prozent der Länge L - rund (rotationssymmetrisch), bei 30 Prozent der Länge L - quadratisch (nicht rotationssymmetrisch), bei 60 Prozent - rund (rotationssymmetrisch), bei 100 Prozent quadratisch (nicht rotationssymmetrisch); oder ein Innendiffusorteil ID, das in irgendeinem Querschnitt polygonal mit einer anderen Eckenzahl als vier, insbesondere fünfeckig, gestaltet ist.

Im Gegensatz zu Diffusoren, die hinter Gasturbinen eingesetzt werden, deren Strömung unter der Wirkung des dort vorhandenen letzten Leitrades keinen Drall mehr aufweist, erstreckt sich die Erfindung insbesondere auf Ventilatoranordnungen mit Ventilatoren 2 und Diffusoren 3 ohne Leitrad, wobei die Ventilatoren 2 einen Drall in der Gasströmung erzeugen.

**Bezugszeichen**

1    Ventilatoranordnung
2    Ventilator von 1
3    Diffusor von 1
4    Motor von 2

| 5 | Wandring von 1 |
|---|---|
| 6 | Untergrund für 1 |
| 7 | Schaufel von 2 |
| 8 | Nabe von 2 |
| 9a | Trag- und Formring von 3 (Fig. 9) |
| 9b | Stützstrebe von 3 (Fig. 9) |
| 10 | Eintrittsöffnung in 3 |
| 11 | Querschnitt von 10 |
| 20 | Austrittsöffnung aus 3 |
| 21 | Querschnitt von 20 |
| 30 | Außengehäuse von 3 |
| 31 | Querschnitt von 30 bei 10 |
| 32 | Querschnitt von 30 bei 20 |
| 40 | Innengehäuse von 3 |
| 41 | Querschnitt von 40 bei 10 |
| 42 | Querschnitt von 40 bei 20 |

| AD | Außendiffusorteil |
|---|---|
| A1 | Querschnittsfläche von 10 |
| A2 | Querschnittsfläche von 20 |
| D1 | Außendurchmesser von 10 |
| I | Diffusorinnenraum |
| ID | Innendiffusorteil |
| L | Länge von 3 bzw. AD/ID |
| $L_{ext}$ | Länge von AD |
| $L_{int}$ | Länge von ID |
| P | Plane (Fig. 9) |
| S | Hauptströmungsrichtung durch 3 |
| X-X | Längsachse durch 1, 2, 3 |

**Patentansprüche**

1. Ventilatoranordnung (1), umfassend einen Diffusor (3) und einen Ventilator axialer, radialer oder diagonaler Bauart, wobei der Diffusor (3) über Befestigungsmittel oder durch reib- oder formschlüssige Verbindungen an mindestens einem feststehenden Teil des Ventilators (2) befestigt ist, wobei der Diffusor (3) eine Eintrittsöffnung (10) und eine Austrittsöffnung (20) für ein gasförmiges Medium aufweist, das von der Eintrittsöffnung (10) in einer axial gerichteten Hauptströmungsrichtung (S) einen von einem Außengehäuse (30) umschlossenen Diffusorinnenraum (1) bis zur Austrittsöffnung (20) durchströmt, wobei der Querschnitt (21) der Austrittsöffnung (20) größer als der Querschnitt (11) der Eintrittsöffnung (10) ist und sich der Querschnitt des Diffusorinnenraums (1) ausgehend vom Querschnitt (11) der Eintrittsöffnung auf den Querschnitt (21) der Austrittsöffnung (20) hin vergrößert, wobei das Außengehäuse (30) ein den Diffusorinnenraum (1) außenseitig begrenzendes Außendiffusorteil (AD) bildet, wobei konzentrisch zu dem Außendiffusorteil (AD) ein Innendiffusorteil (ID) angeordnet ist, das mit einem Innengehäuse (40) den Diffusorinnenraum (1) innenseitig begrenzt, wobei das Außendiffusorteil (AD) und/oder das Innendiffusorteil (ID) derart ausgeführt ist/sind, dass der Querschnitt des Diffusorinnenraums (1) an mindestens einer Stelle nicht rotationssymmetrisch ist, wobei der Querschnitt des Außendiffusors (AD) entlang der Hauptströmungsrichtung (S) von einem kreisförmigen Querschnitt (31) an der Eintrittsöffnung (10) auf einen nicht kreisförmigen Querschnitt (32) an der Austrittsöffnung (20) übergeht,
**dadurch gekennzeichnet, dass**
der Diffusor (3) aus gebogenen und miteinander verbundenen, ursprünglich ebenen Platten oder aus einer Plane (P) besteht, die mit Trag- und Formringen (9a), welche die Eintrittsöffnung (10) und die Austrittsöffnung (20) umfassen, versteift ist/sind.

2. Ventilatoranordnung (1) nach Anspruch 1 ,
**dadurch gekennzeichnet, dass** der nicht kreisförmige Querschnitt (32) des Außendiffusorteils (AD) und/oder des Innendiffusorteils (ID) in der Grundgestalt polygonal, insbesondere quadratisch, ist

3. Ventilatoranordnung (1) nach einem der vorhergehenden Ansprüche,

**dadurch gekennzeichnet, dass** der Diffusor (3) aus mehreren einzelnen Diffusorteilen aufgebaut ist, die über Befestigungsmittel, wie Schrauben, Nieten, Klammern oder durch reib- form- und/oder materialschlüssige Verbindungen, wie durch einen Bajonettverschluss, durch eine Clipsverbindung, durch eine Schweißverbindung miteinander verbunden sind.

4. Ventilatoranordnung (1) nach einem der vorhergehenden Ansprüche,
   **dadurch gekennzeichnet, dass** das Innengehäuse (40), das Außengehäuse (30) und/oder Teile derselben aus Kunststoff besteht/bestehen und durch Ur-oder Umformverfahren, wie Spritzgießen, Extrudieren, Rotationsformen, Schäumen, Vakuumtiefziehen, Blasformen, hergestellt ist/sind.

5. Ventilatoranordnung (1) nach Anspruch 4,
   **dadurch gekennzeichnet, dass** mechanisch hoch belastete Bereiche des Innengehäuses (40), des Außengehäuses (30) und/oder von deren Teilen durch mindestens ein beim Urformprozess eingelegtes oder später angebrachtes Metallteil verstärkt sind.

6. Ventilatoranordnung (1) nach einem der vorhergehenden Ansprüche, **dadurch gekennzeichnet, dass** eine tragende Struktur des Diffusors (3) ein Gestell ist, das von einem dünnen Material, insbesondere aus Kunststoff oder aus Blech, überspannt ist.

7. Ventilatoranordnung (1) nach einem der vorhergehenden Ansprüche, **dadurch gekennzeichnet, dass** an dem Innengehäuse (40) und/oder dem Außengehäuse (30) ein Berührschutz angeordnet ist, welcher als separates, am Innengehäuse (40) und/oder am Außengehäuse (30) befestigtes Teil ausgeführt ist.

8. Ventilatoranordnung (1) nach einem der vorhergehenden Ansprüche,
   **dadurch gekennzeichnet, dass** an dem Innengehäuse (40) und/oder an dem Außengehäuse (30) ein Nachleitrad angeordnet ist, welches als separates, am Innengehäuse (40) und/oder Außengehäuse (30) befestigtes Teil ausgeführt ist und aus feststehenden Leitelementen besteht, die derart ausgeführt sind, dass sie Umfangs- und/oder Radialkomponenten der Strömungsgeschwindigkeit in Axialrichtung (X-X) umlenken.

9. Ventilatoranordnung (1) nach einem der vorhergehenden Ansprüche, **gekennzeichnet durch** eine Schalldämmung, wobei insbesondere der Diffusorinnenraum (1) mit einem schalldämmenden Material ausgekleidet ist, derart, dass die freie Oberfläche des schalldämmenden Materials auf der der Hauptströmung (S) zugewandten Seite des Innengehäuses (40) und/oder des Außengehäuse (30) eine strömungstechnisch wirksame Diffusorwand bildet.

10. Ventilatoranordnung (1) nach Anspruch 9,
    **dadurch gekennzeichnet, dass** ein schalldämmendes Material auf der der Hauptströmung (S) abgewandten Diffusoraußenfläche des Außengehäuses (30) aufgebracht ist.

11. Ventilatoranordnung (1) nach Anspruch 9,
    **dadurch gekennzeichnet, dass** das Außendiffusorteil (AD) und/oder das Innendiffusorteil (10) teilweise oder insbesondere vollständig aus dem schalldämmenden Material besteht/bestehen.

**Claims**

1. Fan arrangement (1) comprising a diffuser (3) and a fan of axial, radial or diagonal construction, wherein the diffuser (3) is fastened to at least one static part of the fan (2) by fastening means or by means of frictionally locking or positively locking connections, wherein the diffuser (3) comprises an inlet opening (10) and an outlet opening (20) for a gaseous medium which flows through a diffuser interior (1) which is enclosed by an outer housing (30) in an axially oriented main flow direction (S) from the inlet opening (10) to the outlet opening (20), wherein the cross-section (21) of the outlet opening (20) is larger than the cross-section (11) of the inlet opening (10) and the cross-section of the diffuser interior (1) increases from the cross-section (11) of the inlet opening to the cross-section (21) of the outlet opening (20), wherein the outer housing (30) forms an outer diffuser part (AD) which delimits the diffuser interior (1) on the outside, wherein concentrically with respect to the outer diffuser part (AD) there is arranged an inner diffuser part (ID) which, with an inner housing (40), delimits the diffuser interior (1) to the inside, wherein the outer diffuser part (AD) and/or the inner diffuser part (ID) is/are designed such that the cross-section of the diffuser interior (1) is non-rotationally symmetrical at at least one point, wherein along the main flow direction (S), the cross-section of the outer diffuser (AD) changes from a circular cross-section (31) at the inlet opening (10) to a non-circular cross-section (32) at the outlet opening (20), **characterized in that** the diffuser (3) is composed of bent and interconnected originally planar plates or of a tarpaulin (P) which is/are stiffened with the aid of bearing and shaped rings (9a) which comprise the inlet opening (10) and the outlet opening (20).

2. Fan arrangement (1) according to claim 1, **characterized in that** the non-circular cross-section (32) of the outer diffuser part (AD) and/or of the inner diffuser part (ID) is polygonal, in particular square, in its basic shape.

3. Fan arrangement (1) according to one of the preceding claims, **characterized in that** the diffuser (3) is constructed from a plurality of individual diffuser parts which are connected to one another by means of fastening means, such as screws, rivets, clamps or by friction-locking and/or material-locking connections, such as by a bayonet catch, by a clip connection, by a welded connection.

4. Fan arrangement (1) according to one of the preceding claims, **characterized in that** the inner housing (40), the outer housing (30) and/or parts thereof is/are made of plastic and is/are produced by primary shaping or shaping methods such as injection moulding, extrusion, rotational moulding, foaming, vacuum deep-drawing, blow moulding.

5. Fan arrangement (1) according to claim 4, **characterized in that** mechanically highly loaded areas of the inner housing (40), the outer housing (30) and/or of parts thereof are reinforced by at least one metal part inserted during the primary shaping process or attached later.

6. Fan arrangement (1) according to one of the preceding claims, **characterized in that** a supporting structure of the diffuser (3) is a frame spanned by a thin material, in particular of plastic or of sheet metal.

7. Fan arrangement (1) according to one of the preceding claims, **characterized in that** a contact protection is arranged on the inner housing (40) and/or the outer housing (30), which is formed as a separate part fastened to the inner housing (40) and/or to the outer housing (30).

8. Fan arrangement (1) according to one of the preceding claims, **characterized in that** a guide wheel is arranged on the inner housing (40) and/or on the outer housing (30), which guide wheel is formed as a separate part fastened to the inner housing (40) and/or outer housing (30) and consists of fixed guide elements which are formed such that they deflect circumferential and/or radial components of the flow velocity in the axial direction (X-X).

9. Fan arrangement (1) according to one of the preceding claims, **characterized by** an acoustic insulation, wherein in particular the diffuser interior (1) is lined with an acoustic insulating material such that the free surface of the acoustic insulating material on the side of the inner housing (40) facing the main flow (S) and/or of the outer housing (30) forms a fluidically effective diffuser wall.

10. Fan arrangement (1) according to claim 9, **characterized in that** an acoustic insulating material is applied to the diffuser outer surface of the outer housing (30) facing away from the main flow (S).

11. Fan arrangement (1) according to claim 9, **characterised in that** the outer diffuser part (AD) and/or the inner diffuser part (10) consists partly or in particular completely of the acoustic insulating material.

**Revendications**

1. Ensemble ventilateur (1), comprenant un diffuseur (3) et un ventilateur de type axial, radial ou diagonal, dans lequel le diffuseur (3) est fixé par le biais de moyens de fixation ou par des liaisons par friction ou complémentarité de forme à au moins une partie fixe du ventilateur (2), dans lequel le diffuseur (3) présente une ouverture d'entrée (10) et une ouverture de sortie (20) pour un milieu gazeux, qui traverse depuis l'ouverture d'entrée (10) dans une direction d'écoulement principal orientée axialement (S), un espace intérieur de diffuseur (1) entouré par un boîtier extérieur (30) jusqu'à l'ouverture de sortie (20), dans lequel la section transversale (21) de l'ouverture de sortie (20) est supérieure à la section transversale (11) de l'ouverture d'entrée (10) et la section transversale de l'espace intérieur de diffuseur (1) augmente de la section transversale (11) de l'ouverture d'entrée à la section transversale (21) de l'ouverture de sortie (20), dans lequel le boîtier extérieur (30) forme une partie de diffuseur extérieure (AD) délimitant côté extérieur l'espace intérieur de diffuseur (1), dans lequel une partie de diffuseur intérieure (ID), qui délimite côté intérieur avec un boîtier intérieur (40) l'espace intérieur de diffuseur (1), est agencée concentriquement par rapport à la partie de diffuseur extérieure (AD), dans lequel la partie de diffuseur extérieure (AD) et/ou la partie de diffuseur intérieure (ID) est/sont réalisée(s) de sorte que la section transversale de l'espace intérieur de diffuseur (1) est sans symétrie de révolution à au moins un endroit, dans lequel la section transversale du diffuseur extérieur (AD) passe le long de la direction d'écoulement principal (S) d'une section transversale circulaire (31) au niveau de l'ouverture d'entrée (10) à une section transversale non circulaire (32) au niveau de l'ouverture de sortie (20),

**caractérisé en ce que**

le diffuseur (3) se compose de plaques incurvées et reliées les unes aux autres, initialement planes ou d'une bâche (P), qui est/sont rigidifiée(s) avec des bagues support et de moulage (9a), lesquelles comprennent l'ouverture d'entrée (10) et l'ouverture de sortie (20).

2. Ensemble ventilateur (1) selon la revendication 1,
**caractérisé en ce que** la section transversale non circulaire (32) de la partie de diffuseur extérieure (AD) et/ou de la partie de diffuseur intérieure (ID) a une forme de base polygonale, en particulier carrée.

3. Ensemble ventilateur (1) selon l'une quelconque des revendications précédentes,
**caractérisé en ce que** le diffuseur (3) se compose de plusieurs parties de diffuseur individuelles, qui sont reliées l'une à l'autre par le biais de moyens de fixation, tels que vis, rivets, agrafes ou par des liaisons par friction, complémentarité de forme et/ou de matériau, telles que par une fermeture à baïonnette, par une liaison à clips, par une liaison soudée.

4. Ensemble ventilateur (1) selon l'une quelconque des revendications précédentes,
**caractérisé en ce que** le boîtier intérieur (40), le boîtier extérieur (30) et/ou des parties de ceux-ci est/sont en plastique et est/sont fabriqué(s) par procédé de première transformation ou de seconde transformation, tel que moulage par injection, extrusion, rotomoulage, moussage, emboutissage sous vide, moulage par soufflage.

5. Ensemble ventilateur (1) selon la revendication 4,
**caractérisé en ce que** des zones soumises à une sollicitation mécanique élevée du boîtier intérieur (40), du boîtier extérieur (30) et/ou de leurs parties sont renforcées par au moins une pièce métallique insérée lors du processus de première transformation ou montée plus tard.

6. Ensemble ventilateur (1) selon l'une quelconque des revendications précédentes,
**caractérisé en ce qu'**une structure porteuse du diffuseur (3) est un châssis, qui est enjambé par un matériau fin, en particulier en plastique ou en tôle.

7. Ensemble ventilateur (1) selon l'une quelconque des revendications précédentes,
**caractérisé en ce qu'**une protection contre le contact est agencée au niveau du boîtier intérieur (40) et/ou du boîtier extérieur (30), laquelle est réalisée en tant que partie séparée, fixée au niveau du boîtier intérieur (40) et/ou au niveau du boîtier extérieur (30).

8. Ensemble ventilateur (1) selon l'une quelconque des revendications précédentes,
**caractérisé en ce qu'**une roue directrice arrière est agencée au niveau du boîtier intérieur (40) et/ou au niveau du boîtier extérieur (30), laquelle est réalisée en tant que pièce séparée, fixée au niveau du boîtier intérieur (40) et/ou du boîtier extérieur (30) et se compose d'éléments directeurs fixes, qui sont réalisés de sorte qu'ils dévient des composants circonférentiels et/ou radiaux de la vitesse d'écoulement dans la direction axiale (X-X).

9. Ensemble ventilateur (1) selon l'une quelconque des revendications précédentes,
**caractérisé par** une isolation acoustique, dans lequel en particulier l'espace intérieur de diffuseur (1) est revêtu d'un matériau insonorisant de sorte que la surface libre du matériau insonorisant forme sur le côté tourné vers l'écoulement principal (S) du boîtier intérieur (40) et/ou du boîtier extérieur (30) une paroi de diffuseur active du point de vue de l'écoulement.

10. Ensemble ventilateur (1) selon la revendication 9,
**caractérisé en ce qu'**un matériau insonorisant est appliqué sur la surface extérieure de diffuseur opposée à l'écoulement principal (S) du boîtier extérieur (30).

11. Ensemble ventilateur (1) selon la revendication 9,
**caractérisé en ce que** la partie de diffuseur extérieure (AD) et/ou la partie de diffuseur intérieure (10) est/sont en partie ou en particulier entièrement en matériau insonorisant.

Fig. 1

Fig. 2

Fig. 3

Fig. 4

Fig. 5

Fig. 6

**FIG. 7**

$$\frac{A_2}{A_1} = -0,45 \cdot \left(\frac{L}{D_1}\right)^2 + \frac{L}{D_1} + 1$$

$$d_{hydr}/L = 1,55 \cdot \left(\frac{L}{D_1}\right)^{-0,82}$$

**FIG. 8**

3 (ID, AD)

P

9b

9a

**FIG. 9**

FIG. 10b

FIG. 10a

FIG. 11b

FIG. 11a

FIG. 12b

FIG. 12a

FIG. 13b

FIG. 13a

FIG. 14a FIG. 14b

FIG. 15a FIG. 15b

FIG. 16a FIG. 16b

FIG. 17a FIG. 17b

FIG. 18a

FIG. 18b

FIG. 19a

FIG. 19b

FIG. 20a

FIG. 20b

FIG. 21b

FIG. 21a

FIG. 22a

FIG. 22b

FIG. 23a

FIG. 23b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0581978 A1
- FR 2816361 A1
- US 2376642 A
- US 2668523 A